(19) Europäisches Patentamt
European Patent Office
Office européen des brevets

(11) **EP 4 073 608 B1**

(12) **EUROPEAN PATENT SPECIFICATION**

(45) Date of publication and mention
of the grant of the patent:
**08.01.2025 Bulletin 2025/02**

(21) Application number: **19828647.8**

(22) Date of filing: **15.12.2019**

(51) International Patent Classification (IPC):
**G05D 1/00** (2024.01)    **B62D 15/02** (2006.01)

(52) Cooperative Patent Classification (CPC):
**G05D 1/0223; B62D 15/025**

(86) International application number:
**PCT/EP2019/085210**

(87) International publication number:
**WO 2021/121537 (24.06.2021 Gazette 2021/25)**

(54) **A METHOD FOR ACCURATE AND EFFICIENT CONTROL OF AUTOMATED GUIDED VEHICLES FOR LOAD TRANSPORTATION TASKS**

VERFAHREN ZUR GENAUEN UND EFFIZIENTEN STEUERUNG VON AUTOMATISIERTEN GEFÜHRTEN FAHRZEUGEN FÜR LASTTRANSPORTAUFGABEN

PROCÉDÉ DE COMMANDE PRÉCISE ET EFFICACE DE VÉHICULES GUIDÉS AUTOMATISÉS POUR DES TÂCHES DE TRANSPORT DE CHARGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**19.10.2022 Bulletin 2022/42**

(73) Proprietor: **RoMb Technologies d.o.o.**
**10000 Zagreb (HR)**

(72) Inventors:
• **KOKOT, Mirko**
**10000 Zagreb (HR)**
• **MIKLIC, Damjan**
**10000 Zagreb (HR)**

(74) Representative: **Bihar, Zeljko**
**Admoveo d.o.o.**
**Gracanska cesta 111**
**10000 Zagreb (HR)**

(56) References cited:
**CN-A- 109 375 632    US-A1- 2019 086 930**

## Description

## Technical Field

The present invention belongs to the technical field of controlling position or course in two dimensions specially adapted to land vehicles along the already precomputed path involving the speed control of the vehicle. More specifically, the said vehicle control includes, *inter alia,* control over vehicles with multiple actuated wheels, with the provision to explicitly avoid wheel slippage and ensures that velocity and acceleration constraints along the said path are respected.

## Technical Problem

Autonomous or self-driving vehicles, which can move without being controlled by a human operator, have significant commercial potential in a wide area of applications, from transportation of people to material handling. Recent interest in self-driving cars has led to significant research advances in path planning and control methods for autonomous motion, as described in:

- Paden, B., Cáp, M., Yong, S. Z., Yershov, D., and Frazzoli, E. (2016). A survey of motion planning and control techniques for self-driving urban vehicles. IEEE Transactions on intelligent vehicles, 1(1):33-55; DOI:10.1109/tiv.2016.2578706

- Sorniotti, A., Barber, P., and De Pinto, S. (2017). Path tracking for automated driving: A tutorial on control system formulations and ongoing research. In Automated Driving, pages 71-140. Springer; ISBN 978-3-319-31893-6.

However, different applications pose different demands, and control methods used for material handling vehicles, sometimes called Automated Guided Vehicles, AGVs, as discussed in the reference below:

- Andreasson, H., Bouguerra, A., Cirillo, M., Dimitrov, D. N., Driankov, D., Karlsson, L., Lilienthal, A. J., Pecora, F., Saarinen, J. P., Sherikov, A., and Stoyanov, T. (2015). Autonomous transport vehicles: Where we are and what is missing. IEEE Robotics & Automation Magazine, 22(1):64-75; DOI: 10.1109/MRA.2014.2381357

must meet the specific requirements of load manipulation, in particular the items 1.-5. below:

1. positioning accuracy within $\pm 5$ mm and 0.5° for picking up and delivering loads which are typically collocated on pallets,
2. respecting vehicle constraints and ensuring load and environment safety,
3. real-time execution on platforms with constrained computational capabilities,
4. ability to control different vehicle kinematic configurations, to provide sufficient maneuverability for operating in constrained spaces, as well as,
5. minimal travel times for maximum efficiency and resource utilization.

To deal with the conflicting nature of these requirements, the industrial state of the art is to use relatively simple controllers which consider the geometric relationships between the path and the vehicle, such as the "Pure pursuit" controller disclosed in:

- Campbell, S. F. (2007). Steering control of an autonomous ground vehicle with application to the DARPA urban challenge. Master's thesis, Massachusetts Institute of Technology. https://dspace.mit.edu/handle/1721.1/42301

or LQR (linear-quadratic regulator) controllers used by the market leader Kollmorgen Automation AB (2019), see the link:

- https://ndcsolutions.com/media/1219/master-thesis-model-predictive-control-of-automated-guided-vehicle-b.pdf

These approaches directly satisfy the accuracy (item 1) and real-time execution (item 3) requirements. Safety constraints (item 2) and adaptation to vehicle kinematics (item 4) are satisfied by hand-tuning heuristic rules on parameters, which can be a tedious and time-consuming process, e.g., velocity limits are imposed on particular segments of vehicle paths and then verified and adjusted by simulation.

Efficiency (item 5) is often sacrificed, i.e., the vehicles are not being used to their full potential. In particular, maximum vehicle velocities on curved segments are often artificially reduced to maintain the required accuracy. So, the focus of the present invention is to unlock the velocity potentials of the AGVs by the proposed method.

The presented method solves the problem of computing the required steering and velocity input signals which drive an autonomous vehicle safely and accurately along the desired path. It runs in real-time on standard industrial hardware providing significantly better accuracy at higher velocities and when making turns, compared to state-of-the-art control systems. It explicitly takes into account the vehicle kinematic model and constraints, providing optimal control signals without extensive parameter tuning. Finally, it optimizes path traversal times enabling maximum vehicle utilization.

**State of the Art**

Considering the state of art, there are numerous documents describing speed optimization, such as US patent application US2019/086930A1 for the invention SPEED OPTIMIZATION BASED ON CONSTRAINED SMOOTHING SPLINE FOR AUTONOMOUS DRIVING VEHICLES; filed in the name of BAIDU USA LLC.

The cited document discloses a similar approach as disclosed with this invention, but without performing an adaptation of the sampling time by taking into account the actual AGV speed and the actual prediction horizon length. Such an approach would reduce the position error of the said AVG, while driving for instance at low speed and it would concurrently allow for optimization of the calculation load, carried by the on-board processing unit.

Chinese patent application CN109375632A for the invention REAL-TIME TRAJECTORY PLANNING METHOD FOR AUTONOMOUS VEHICLE, filed in the name of TSINGHUA UNIVERSITY discloses a real-time trajectory planning method for an autonomous vehicle that can enable the autonomous vehicle to mimic driving features of a driver in an unknown environmental condition. Furthermore, the said solution is capable of planning a trajectory that matches the driver's expectation by taking safety and efficiency as the driving targets according to the surrounding vehicles and environmental information in real-time.

The cited prior art therefore does not teach or suggest the method disclosed herein.

However, in order to describe the motivation for the present invention, the closest prior art document will be cited in each method step disclosed in the detailed description of the invention.

**Summary of the Invention**

The present invention discloses a control method for automated guided vehicles (AGV), where said AGV is equipped with:

- one or more computer-controlled actuators and optionally brakes, allowing the control of steering and velocity of the said AGV over the parametrically set path curve within the given environment;
- a set of sensors, capable of interacting with the said environment, that generates signals from which the AGV position is calculable within the said environment, and
- a processing unit which is capable of executing said control method steps; control the AGV's actuators and optionally brakes and receive the signals generated by the AGV sensors

At start, the vehicle parameters, list of path's segments and constrains, and vehicle state are loaded in the processing unit. The disclosed method consists of the following steps where said method:

i) performs adaptive sampling of the path given as a parametric curve to identify the critical velocity points represented as the ordered sequence $U$;

ii) computes the velocity limits $L$ at critical velocity profile points determined in step i) taking into account the AGV acceleration and velocity limits imposed by the vehicle actuators, segment-specific velocity limits due to the traffic rules, safety input activation received from AGV sensors and limits imposed by the steering velocity limits, and finalizes ordered sequence $U$ and corresponding velocity limits $L$ that define specific wheel traction velocities;

iii) plans optimal traction velocity and steering profiles for the wheels taking into account maximum accelerations of the said wheels, where the said step ends with nominal traction velocity and steering setpoints for each wheel;

iv) adapts the sample time and prediction horizon lengths in the model predictive control to the current AGV's velocity to maintain high accuracy at low speeds by increasing the sample time and prediction horizon at lower speed, in order to insure lateral error elimination;

v) projects the current vehicle pose onto its closest point along the desired path, and then samples discrete path poses for the entire prediction horizon, assuming nominal velocities and steering angles, to obtain reference coordinate frames and linearization points for the next step;

vi) computes linearized models for the prediction horizon, casts the optimal control problem to a quadratic program (QP);

vii) solves QP from step vi) to obtain velocity and steering angle setpoint offsets;

viii) velocity and steering angle setpoint offsets are superimposed on the nominal trajectory values, driving the tracking errors to zero; the actuators execute necessary operations on the AGV under control; and

ix) a new control cycle begins by updating the vehicle state measurements from AGV sensors; and

A. if the path is not appended by a new path's segment, the safety sensor inputs are checked and if remain unchanged program control is directed to step iv) - otherwise, if the safety sensor inputs are changed the program control is directed to step ii); or

B. if the path is appended by a new path's segment, the method is directed to step i).

In some embodiment, the adaptive sampling in step i) is performed by using Bezier curves.

In one embodiment, in step iii) said method takes into account a first-order lag of wheel velocity responses and first or second order lag of wheel steering responses which is relevant for ensuring good tracking, as well as the external velocity limit control; the resulting trajectory for each separate wheel minimizes the total travel time by adjusting the actuator traction velocity and steering setpoints in a continuous manner while achieving the imposed vehicle velocity limits per path segments.

In one of the variants when vehicle configuration is with multiple actuated wheels, the said method in step vi) avoids undesired wheel interaction which leads to some of the wheels blocking or slipping.

An automated guided vehicle (AGV) comprising means for carrying out the method as described above is disclosed.

## Description of the Figures

Figures 1A and 1B represent the flowchart of the disclosed method for automated guided vehicles.

Figure 2 represents typical AGV path and kinematics.

Figure 3A depicts "crab" driving mode where orientation of vehicle is constant in world-fixed frame. Figure 3B represents "double-steer" driving mode where orientation is always aligned with line tangent to the path, represented on both figures 3A, 3B as the solid line. Subscripts $f, r$ denote front and rear wheel paths defined in accordance with equation (9).

## Detailed Description of the Invention

The invention discloses a control method for automated guided vehicles (AGV). In general, said AGV is equipped with:

- one or more computer-controlled actuators in the form of AGV's wheels with controllable steering and traction, and optionally brakes, allowing the control of AGV over the parametrically set path curve $C(u)$ within the given environment; and
- set of sensors, capable to interact with the said environment, that generates time-depended signals from which the AGV's pose in time is calculable within the said environment.

A processing unit, which is capable to execute said control method steps; e.g. to control the AGV's actuators, optionally brakes and receive the signals generated by the AGV sensors, which can be located outside of the AGV but connected wirelessly or via cabling in order to perform the desired task in a reliable manner. In other variants, the processing unit can be integrated with the AGV which is the preferred solution. The processing unit is a standard computer, e.g., industrial hardware, with appropriate inputs-outputs linked with the said AGV motion control parts. The person skilled in the art will immediately recognize the requirements said processing unit should satisfy in order to be reliably connected with the AGV's actuators and, optionally, the brakes.

The presented method solves the problem of computing the required steering and velocity input signals which drive an autonomous vehicle safely and accurately along the desired path. It runs in real-time on standard industrial hardware and explicitly takes into account the vehicle kinematic model and constraints, providing optimal control signals without extensive parameter tuning. Finally, the said method optimizes path traversal times enabling maximum vehicle utilization.

The notation that will be used consistently throughout the document can be summarized as follows:

- $x_a$ denotes the scalar $x$ property of $a$

- $x_a^b$ denotes the scalar *x* property of *a* given by the source *b*
- $x_a$ denotes the vector *x* property of *a* in the world-fixed frame {*w*}
- $x_a^b$ denotes the vector *x* property of *a* in frame of reference {*b*}

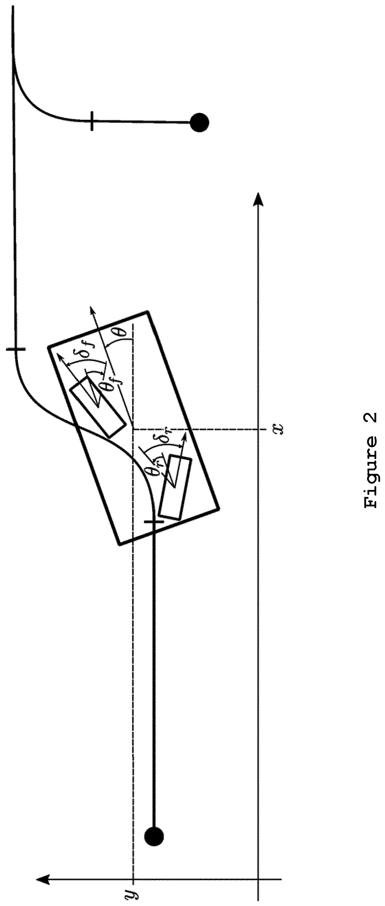

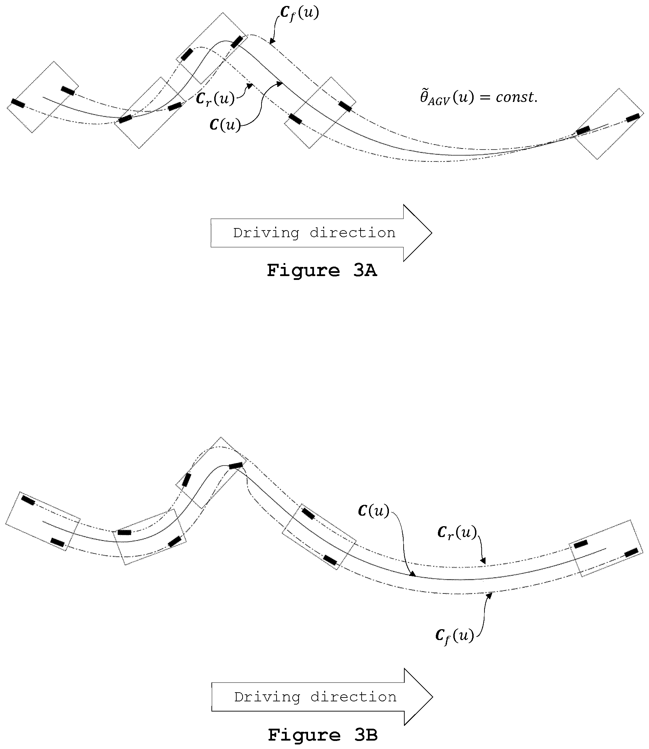

The method assumes a typical AGV navigation scenario, depicted in Figures 2, 3A and 3B, a vehicle with two actuated wheels - front and rear (subscript *f* and *r*) both with two degrees of freedom - steering and traction - moving along a designated fixed path. Wheels are defined with their pose in respect to the AGV's tracking point, given by their offset along vehicle x-y axes and mounting angles $\theta_f$ and $\theta_r$. Steering angle of each wheel is denoted by $\delta$ and the traction by velocity *v*. This is a generic kinematic model which is applicable to all vehicles without wheel steering offset, i.e., whose wheel steering axis is coincident with wheel traction contact point. The presented method can analogously be adapted for vehicles with different number of actuated wheels. Differential drive vehicles and vehicles with Ackermann steering geometry are defined with corresponding mode of motion and actuated wheel limitations.

By setting appropriate constraints on the relationship between $\delta_f$, $\delta_r$, $v_f$ and $v_r$ this simple model can describe all significant kinematic configurations used in the industry today. The AGV's angle $\theta_{AGV}$ depicts the inclination of vehicle reference frame with respect to the *x - y* coordinates fixed to the environment, i.e., the rotation of vehicle-fixed coordinate system (denoted by the superscript *AGV* in the rest of the document) with respect to the world-fixed coordinate system (denoted by the superscript *w* in the rest of the document). The vehicle reference frame is centered on the vehicle tracking point which can be an arbitrarily selected point on vehicle. A generic model of the kinematic configuration, depicted in Figure 2, can be written as equation (1):

$$\dot{\boldsymbol{q}}_{AGV} = \boldsymbol{R}(\theta_{AGV})[\mathbf{H}^T\mathbf{H}]^{-1}\mathbf{H}^T\boldsymbol{v}_{f,r}^{AGV}\left(v_f, v_r, \delta_f, \delta_r\right) \qquad (1)$$

$\boldsymbol{R}(\theta_{AGV})$ is the rotation matrix from the vehicle-fixed frame to the world-fixed coordinate frame. **H** is the velocity Jacobian matrix linking wheel speed to vehicle tracking point speed, measured with respect to the world-fixed frame and expressed in the vehicle-fixed coordinate frame. $\boldsymbol{v}_{f,r}^{AGV} = \begin{bmatrix} v_{f_x}^{AGV} & v_{f_y}^{AGV} & v_{r_x}^{AGV} & v_{r_y}^{AGV} \end{bmatrix}^T$ is the vector of wheel velocities as a function of both actuators. $\boldsymbol{q}_{AGV} = [x_{AGV} y_{AGV} \theta_{AGV}]^T$ is the system state vector defined as vehicle pose and $\dot{\boldsymbol{q}}_{AGV} = [v_{AGV_x} v_{AGV_y} \omega_{AGV}]^T$ is its derivative. The model is derived according to the methodology outlined in the reference below:

- Kelly, A. (2013). Mobile Robotics: Mathematics, Models, and Methods. Cambridge University Press.

and augmented by modeling the traction velocity and steering dynamics by first or second order lag. The lag model is a analogous to the approach in:

- Kim, E., Kim, J., and Sunwoo, M. (2014). Model predictive control strategy for smooth path tracking of autonomous vehicles with steering actuator dynamics. International Journal of Automotive Technology, 15(7) :1155-1164.

Namely, AGV velocities are an order of magnitude lower than road vehicle velocities, maximum velocities are typically up to 2 m/s and masses are much larger - payloads vary by industry from 1000 kg to over 100 tones. This kinematic model describes AGVs in typical operating conditions with sufficient accuracy without unnecessary computational complexity.

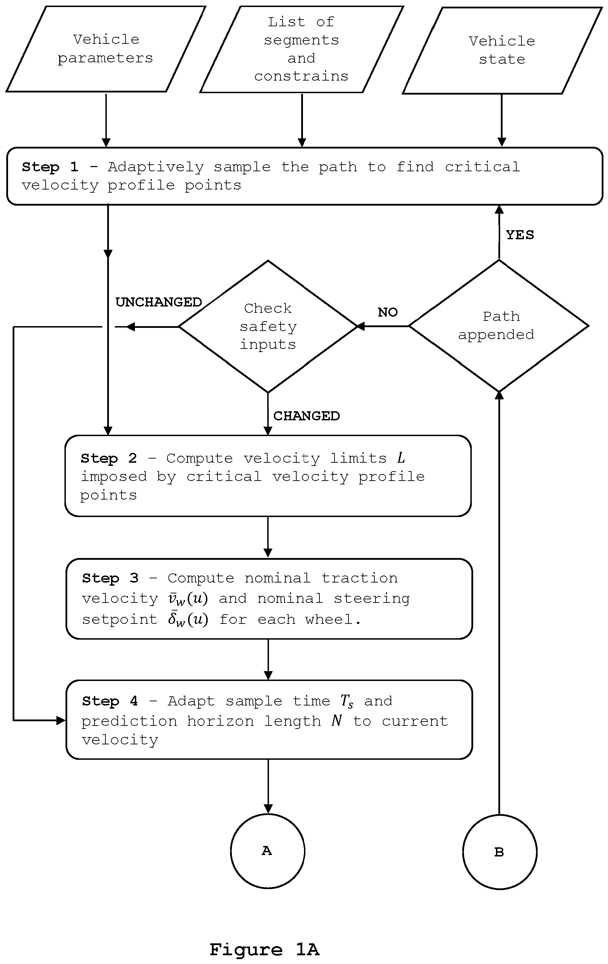

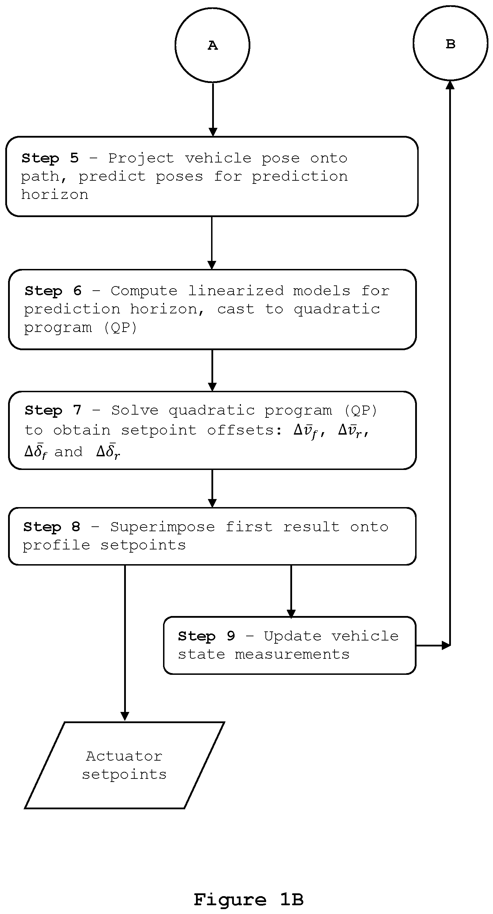

The main steps of the control method, which is based on Model predictive control (MPC) principles are outlined in Figures 1A-1B. Upon receiving a new path, the path pre-processing steps **Step 1** - **Step 3** are performed, which yield a reference trajectory.

In the update loop, a quadratic optimization problem is formulated based on current vehicle state and the reference trajectory, which is then solved using an efficient solver. The first element of the

optimized output sequence is superimposed on the reference trajectory input, yielding actuator setpoints which drive the vehicle state along the reference trajectory.

In the rest of the text the steps will be studied in detail. Initially, the vehicle model, parameters and constrains, and also path are preloaded into the system. The vehicle parameters are each wheels mounting position $\boldsymbol{r}_f^{AGV} = \begin{bmatrix} x_f^{AGV} & y_f^{AGV} \end{bmatrix}^T$, $\boldsymbol{r}_r^{AGV} = \begin{bmatrix} x_r^{AGV} & y_r^{AGV} \end{bmatrix}^T$ and mounting orientation $\theta_f^{AGV}$, $\theta_r^{AGV}$, maximum traction velocities $v_f$, $v_r$ and corresponding maximum wheel accelerations $a_f$, $a_r$, as well as the maximum values of steering angle $\delta_f$, $\delta_r$ maximum steering angle velocities $\omega_f$, $\omega_r$ and other values that represents the vehicle as such. In the rest of the text the superscript *param* will be used to denote such values, e.g., $\omega_f^{param}$. It should also be noted, in the rest of the document analogous calculations for both wheels shall be denoted by subscript *w* - which should not be confused with the world-fixed frame denoted by superscript *w*.

A path is defined as a list of continuous segments, each defined as parametric curve $\boldsymbol{C}(u) = [\tilde{x}_{AGV}(u)\ \tilde{y}_{AGV}(u)]^T$ with the corresponding mode of motion and maximum vehicle speed assigned to each segment due to traffic or other safety reasons. In the rest of the text the superscript *segment* will be used to denote this value, i.e., $v^{segment}$. For a path segment starting at $\boldsymbol{C}_0(u_0)$ and ending at $\boldsymbol{C}_1(u_1)$, its curve can be linearly reparametrized by $\boldsymbol{C}(u(\tau))$ where $u_0 = u(0)$, $u_1 = u(1)$ and $u(\tau)$ is defined by:

$$u(\tau) = u_0 + \tau(u_1 - u_0) \tag{2}$$

In the rest of the document parameter *u* will be used as if it were reparametrized so $\boldsymbol{C}_0 = \boldsymbol{C}(0)$, $\boldsymbol{C}_1 = \boldsymbol{C}(1)$ and $0 \leq u \leq 1$ are true.

Curve length $s(a,b)$ from $\boldsymbol{C}(a)$ to $\boldsymbol{C}(b)$ can be computed by Gaussian quadrature:

$$s(a,b) = \int_a^b \left\| \dot{\boldsymbol{C}}(u) \right\| du \tag{3}$$

By modes of motion we understand different kinematic configurations which can be defined as a function $\tilde{\theta}_{AGV}(u)$ which describes the evolution of vehicle nominal orientation along segment $\boldsymbol{C}(u)$. For instance, most often utilized kinematic configurations are "steer drive" and its variation "double steer drive", where vehicle orientation is always aligned with the line tangent to a path, see Figure 3B, defined with equation (5):

$$\tilde{\theta}_{AGV}(u) = \text{atan} \frac{\dot{\tilde{y}}_{AGV}(u)}{\dot{\tilde{x}}_{AGV}(u)} \tag{4}$$

Another example is "crab drive", Figure 3A, where vehicle orientation is constant in world-fixed frame, and is trivially defined as:

$$\tilde{\theta}_{AGV}(u) = const. \tag{5}$$

Nominal heading of the vehicle $\tilde{\zeta}_{AGV}(u)$, which denotes direction in which the vehicle tracking point moves in world-fixed frame, is always aligned with the path tangent:

$$\tilde{\zeta}_{AGV}(u) = \text{atan} \frac{\dot{\tilde{y}}_{AGV}(u)}{\dot{\tilde{x}}_{AGV}(u)} \tag{6}$$

Correspondingly, nominal vehicle speed $\tilde{v}_{AGV}(u) = [\tilde{v}_{AGV_x}(u)\ \tilde{v}_{AGV_y}(u)]^T$ is defined by the following expression:

$$\tilde{\boldsymbol{v}}_{AGV}(u) = \frac{d\boldsymbol{C}(u)}{dt} = \frac{d\boldsymbol{C}(u)}{du}\frac{du}{ds}\frac{ds}{dt} = \frac{\dot{\boldsymbol{C}}(u)}{\left\|\dot{\boldsymbol{C}}(u)\right\|}\tilde{v}_{AGV}(u) \tag{7}$$

Nominal angular velocity of AGV is calculated from a mode of motion:

$$\tilde{\omega}_{AGV}(u) = \frac{d\tilde{\theta}_{AGV}(u)}{dt} = \frac{d\tilde{\theta}_{AGV}(u)}{du}\frac{du}{ds}\frac{ds}{dt} = \frac{\dot{\tilde{\theta}}_{AGV}(u)}{\left\|\dot{\boldsymbol{C}}(u)\right\|}\tilde{v}_{AGV}(u) \tag{8}$$

Considering the relative dynamics between the tracking point of the vehicle and its actuated wheels, nominal position of a wheel is defined as a function $\boldsymbol{C}_w(u)$, i.e., a path that each actuated wheel traverses:

$$C_w(u) = C(u) + R\left(\tilde{\theta}_{AGV}(u)\right) r_w^{AGV} \qquad (9)$$

With analytically defined wheel path $C_w(u) = [\tilde{x}_w(u)\ \tilde{y}_w(u)]^T$, nominal wheel heading $\tilde{\zeta}_w(u)$ is calculated analogously to equation (6) and nominal wheel speed $\tilde{v}_w(u)$ analogously to equation (7). Nominal traction velocity $\tilde{v}_w(u)$ is defined by:

$$\tilde{v}_w(u) = \|\tilde{\boldsymbol{v}}_w(u)\| = \frac{\|\dot{\boldsymbol{C}}_w(u)\|}{\|\dot{\boldsymbol{C}}(u)\|}\tilde{v}_{AGV}(u) \qquad (10)$$

Considering the vehicle orientation and wheel mounting orientation, the nominal steering angle for a wheel $\delta_w(u)$ is calculated by the following formula:

$$\tilde{\delta}_w(u) = \tilde{\zeta}_w(u) - \left(\tilde{\theta}_{AGV}(u) + \theta_w^{AGV}\right) \qquad (11)$$

From this, a nominal steering velocity of an actuated wheel can be expressed as:

$$\begin{aligned}
\tilde{\omega}_w(u) &= \frac{d\tilde{\delta}_w(u)}{dt} = \frac{d\tilde{\zeta}_w(u)}{ds_w}\frac{ds_w}{dt} - \frac{d\tilde{\theta}_{AGV}(u)}{dt} \\
&= \kappa_w(u)\tilde{v}_w(u) - \tilde{\omega}_{AGV}(u) \qquad (12)\\
&= \frac{\tilde{v}_{AGV}(u)}{\|\dot{\boldsymbol{C}}(u)\|}\left(\kappa_w(u)\|\dot{\boldsymbol{C}}_w(u)\| - \dot{\tilde{\theta}}_{AGV}(u)\right)
\end{aligned}$$

Curvature $\kappa_w(u)$ of parametric curve $C_w(u)$ is defined in a standard manner by equation (13), where, for 2D vector cross product, its analog $\begin{bmatrix}a\\b\end{bmatrix} \times \begin{bmatrix}c\\d\end{bmatrix} = a*d - b*c$ is used:

$$\kappa_w(u) = \frac{d\tilde{\zeta}_w(u)}{ds_w(u)} = \frac{\dot{\boldsymbol{C}}_w(u) \times \ddot{\boldsymbol{C}}_w(u)}{\|\dot{\boldsymbol{C}}_w(u)\|^3} \qquad (13)$$

It should be noted that by equations (10) and (12) for the vehicle described by the mounting position $r_w^{AGV}$ of its wheels, moving along path segment defined as parametric curve $C(u)$ in a mode of motion $\tilde{\theta}_{AGV}(u)$, nominal traction and steering velocity of each wheel are expressed dependent on a common nominal velocity of vehicle $\tilde{v}_{AGV}(u)$.

The disclosed method is divided in steps described below.

**Step 1** - performs adaptive sampling of the path segments expressed as a parametric curve $C(u)$ to identify critical velocity points, characterized by highly non-linear steering dynamics. Parametric curve, adaptively sampled by the $n + 1$ points, is represented by the ordered sequence $U = \{u_0 = 0, u_1, \ldots, u_n = 1\}$. Starting with $U = \{0, 1\}$, each segment is recursively split into $n$ smaller sub-curves $C_k$ starting at $C(u_k)$ and ending at $C(u_{k+1})$ for $\forall k \in \{0, 1, \ldots, n-1\}$ until they satisfy the sufficient linearity criterion defined by:

$$\mathcal{L}(C_k) = \frac{s(u_k, u_{k+1})}{\|C(u_{k+1}) - C(u_k)\|} \qquad (14)$$

The adaptive sampling is performed as explained, for instance, in the reference:

- de Figueiredo L. H. (1993). Adaptive Sampling of Parametric Curve. IMPA, Institute de Matematica Pura e Aplicada, Rio de Janeiro, Brasil. http://ariel.chronotext.org/dd/defigueiredo93adaptive.pdf

As a direct consequence of path length equation (3) and definition of the sufficient linearity by equation (14), the path is sampled more often in the areas where higher derivatives of a curve are more prominent, i.e., for $u_k \le u \le u_{k+1}$ and

$\mathcal{L}(\boldsymbol{C}_k) \simeq 1$, meaning that $\dot{\boldsymbol{C}}(u)$ is sufficiently constant for $\forall k \in \{0, 1, ..., n - 1\}$. The value of linearity criterion $\mathcal{L}(\boldsymbol{C}_k)$ is an implementation detail or can be set as an additional parameter.

These new points are also identified as initial critical velocity profile points. Namely, by reordering equation (12), traction velocity limit $v_w^\omega(u)$ can be expressed from maximum steering velocity $\omega_w^{param}$ and nominal angular velocity $\tilde{\omega}_{AGV}(u)$:

$$v_w^\omega(u) = \frac{\omega_w^{param} + \widetilde{\omega}_{AGV}(u)}{\kappa_w(u)} \qquad (15)$$

While it is obvious from equations (13) and (9) that $\kappa_w(u)$ depends on higher derivatives of $\boldsymbol{C}(u)$, mode of motion $\tilde{\theta}_{AGV}(u)$ in most cases is also defined depending on at least the first derivative of the path. Even in cases where this is not true, vehicle paths used in a real-world applications are planned to minimize travel time, i.e., maximize vehicle velocity and minimize traveled distance, which means sparse segments with complicated and sharp turns. Hence presented method is sufficient to define initial critical velocity profile points.

In one of preferred embodiments, path segments $\boldsymbol{C}(u)$ are defined as Bezier curves, but the above approach is equally adaptable to any parametrically defined curve.

Step 1 ends with performed adaptive sampling of the path segments $\boldsymbol{C}(u)$ to avoid needless sampling of sufficiently linear segments and identifies initial critical velocity profile points sequence $U$ for the next step.

**Step 2** - computes the vehicle velocity limits at critical velocity profile points defined as a sequence of limits:

$$L = \left\{ L_k = \max\left(\tilde{v}_{AGV}(u_k)\right) \mid \forall u_k \in U \right\} \qquad (16)$$

Also, it inserts additional samples into the ordered critical velocity points sequence $U$ where step 1 had failed to address the traction velocity limit $v_w^\omega(u)$ non-linearity.

Maximum nominal velocity of vehicle is defined by considering the traction and steering velocity limits $v_w^{param}$ and $\omega_w^{param}$ of each wheel imposed as vehicle parameters, segment-specific velocity limit $v^{segment}$, as well as safety input activation limit $v^{safety}$. First, from equations (10) and (12) following ratios are defined for each wheel:

$$R_w^v(u) = \frac{\tilde{v}_w(u)}{\tilde{v}_{AGV}(u)} \qquad (17)$$

$$R_w^\omega(u) = \frac{\widetilde{\omega}_w(u)}{\tilde{v}_{AGV}(u)} \qquad (18)$$

With this, we can define $max(\tilde{v}_{AGV}(u))$ with the following expression:

$$\max\left(\tilde{v}_{AGV}(u)\right) = \min\left(\frac{v_f^{param}}{R_f^v(u)}, \frac{v^{segment}}{R_f^v(u)}, \frac{v^{safety}}{R_f^v(u)}, \frac{\omega_f^{param}}{R_f^\omega(u)}, \frac{v_r^{param}}{R_r^v(u)}, \frac{v^{segment}}{R_r^v(u)}, \frac{v^{safety}}{R_r^v(u)}, \frac{\omega_r^{param}}{R_r^\omega(u)}\right)$$

$$(19)$$

Also, we can define wheel traction velocity limit $\max(\tilde{v}_w(u))$ as:

$$\max\left(\tilde{v}_w(u)\right) = \max\left(\tilde{v}_{AGV}(u)\right) R_w^v(u) \qquad (20)$$

It should be noted that any other wheel traction and steering velocity limit, or vehicle linear and angular velocity limit can be analogously appended into the equation (19) by calculating its ratio with nominal vehicle velocity $\tilde{v}_{AGV}(u)$.

It is obvious that maximum steering velocity $\omega_w^{param}$ constrains vehicle velocity limit for $\exists u_k \in U$ only when

$$v_w^\omega(u_k) = \max\big(\tilde{v}_w(u_k)\big)$$ is true. For additional sampling, only sub-sequences of critical velocity points holding this property should be considered. This is achieved by defining a measure of sampling quality $\ell_w(u_k)$ as the ratio of traction velocity limit linear interpolation with constant acceleration $a_k = \dfrac{\max(\tilde{v}_w(u_{k+1}))^2 - \max(\tilde{v}_w(u_k))^2}{2\,s_w(u_k,u_{k+1})}$ and the real value of velocity limit $\max(\tilde{v}_w(u_l))$ at mid-sample $u_l = \dfrac{u_k + u_{k+1}}{2}$ :

$$\ell_w(u_k) = \frac{\sqrt{\max\big(\tilde{v}_w(u_k)\big)^2 + 2a_k s_w(u_k, u_l)}}{\max\big(\tilde{v}_w(u_l)\big)} \tag{21}$$

If current sampling quality is $\ell_w(u_k) \simeq 1$ for $u_k \in U$ and $\exists k \in \{0, 1, ..., n\text{-}1\}$, we insert $u_l$ into ordered critical velocity points sequence $U$. We repeat this process until $\ell_w(u_k) \simeq 1$ for $u_k \in U$ and $\forall k \in \{0, 1, ..., n\text{-}1\}$. Precision of sampling quality measure $\ell_w(u_k)$ is an implementation detail or can be set as an additional parameter.

The presented resampling algorithm will address every sub-sequence where equation (21) is true for any wheel mounting position $r_w^{AGV}$ and mode of motion $\tilde{\theta}_{AGV}(u)$.

Step 2 ends with a finalized ordered sequence $U$ of critical velocity points, that completely describes velocity limit profile non-linearity while avoiding needless sampling density of path segment $C(u)$, and computed corresponding velocity limits sequence $L$ which can be transformed to specific wheel traction velocity by equation (17).

**Step 3** - plans optimal traction velocity and steering angle profiles for each of the wheels, i.e., nominal traction velocity setpoint $\bar{v}_w(u)$ and nominal steering setpoint $\bar{\delta}_w(u)$.

Nominal traction velocity setpoint $\bar{v}_w(u)$ is calculated considering the maximum accelerations $a_w^{param}$ and ensuring that following expression from equation (17) is always true:

$$\frac{\bar{v}_f(u)}{R_{v_f}(u)} = \frac{\bar{v}_r(u)}{R_{v_r}(u)} \tag{22}$$

This can be done by using a divide-and-conquer approach mentioned in the reference:

- Raineri, M., Perri, S., and Bianco, C. G. L. (2017). Online velocity planner for laser guided vehicles subject to safety constraints. In 2017 IEEE/RSJ International Conference on Intelligent Robots and Systems (IROS), pages 6178-6184.

However, the method disclosed herein optimizes the efficiency of computation by utilizing adaptively sampled critical velocity profile points represented as the ordered sequence $U$ and corresponding sequence of limits $L$ instead of velocity bounding function, which reduces needed computation time and can be done online if necessary. The said optimization also enables online segment appending and external velocity limit control - e.g. dynamically limiting vehicle velocity due to safety considerations. The planner also takes into account a first-order lag of wheel velocity responses, which is relevant for ensuring good tracking in differential configurations. The resulting trajectory for each respective wheel minimizes the total travel time by adjusting the actuator traction velocities in a continuous manner while achieving the imposed vehicle velocity limits per segments.

Nominal steering angle setpoint $\bar{\delta}_w(u)$ is calculated by applying first or second order lag of wheel steering responses onto nominal steering angle defined by equation (11) while taking into account traction nominal velocity setpoint $\bar{v}_w(u)$.

Step 3 ends with nominal traction velocity setpoint $\bar{v}_w(u)$ and nominal steering setpoint $\bar{\delta}_w(u)$ for each wheel, i.e., planned nominal trajectory.

**Step 4** - adapts the sample time to the current velocity. This is a key feature that enables the controller to maintain high accuracy at low speeds. In this step the model predictive control (MPC) is used, which is well known in the art; i.e. reference below:

- Rakovic, S.V., Levine W. S. (2018). Handbook of Model Predictive Control. Birkhäuser Basel, ISBN 978-3-319-77489-3.

The prediction horizon of the model predictive control (MPC) controller is specified by the number of time steps that the controller optimizes. At lower speeds the controller "sees" a shorter section of the path, which can lead to insufficient control action for eliminating lateral position error. In simple terms, in order to eliminate lateral error, the vehicle must first steer towards the path, increasing the angular error. At lower speeds, the cost of the angular error increase outweighs the reduction of lateral error within the prediction horizon. By increasing the sample time and prediction horizon at lower speed, we can still insure lateral error elimination.

Step 4 therefore ends with the sample time $T_s$ and prediction horizon lengths $N$ adapted to the current velocity, in an empirical manner.

**Step 5** - Once a nominal trajectory is established for each actuator, defined by the set $\overline{\delta}_f(u)$, $\overline{v}_f(u)$, $\overline{\delta}_r(u)$ and $\overline{v}_r(u)$, as well as sample time $T_s$ and prediction horizon lengths $N$, we project the current vehicle position $r_{AGV} = [x_{AGV} \, y_{AGV}]^T$ onto its closest point along the desired path segment $\boldsymbol{C}(u)$. Parameter $u$ of the closest point is calculated by iterating the Newton-Raphson method:

$$u_{k+1} = u_k - \frac{f(u)}{\frac{d}{du}f(u)} \qquad (23)$$

Function $f(u) = \boldsymbol{O}(u) \cdot \dot{\boldsymbol{C}}(u)$ is a dot product between vector $\boldsymbol{O}(u) = \boldsymbol{C}(u) - r_{AGV}$, connecting the vehicle position $r_{AGV}$ and its projection onto a curve $\boldsymbol{C}(u)$, and a curve tangent vector $\dot{\boldsymbol{C}}(u)$. When f(u) = 0, we have a perpendicular projection. Since theoretically a perpendicular projection onto a curve can have multiple solutions, our initial guess $u_0$ corresponds to a previous known nominal vehicle position which guarantees fast and accurate convergence.

We then sample discrete path poses for the entire prediction horizon, assuming nominal traction velocity and steering angle setpoints, to obtain reference coordinate frames and linearization points for the next step. This simplification (using the nominal trajectory instead of the actual vehicle trajectory) increases method efficiency without sacrificing accuracy, as long as the tracking errors are sufficiently small.

**Step 6 -** The discrete-time version of the model described in equation (**1**) is transformed to the path-fixed coordinate frame at every sampled time and linearized around the sampled trajectory poses. Linearization about a trajectory can be performed as described in:

- Sontag, E. D. (1998). Mathematical Control Theory: Deterministic Finite Dimensional Systems (Texts in Applied Mathematics) (v. 6). Springer; ISBN-13: 978-1461268253

The linearization can be written as:

$$\mathbf{q}(k+1) = \widetilde{\mathbf{q}}(k+1) + \Delta q(k+1) = \mathbf{f}\big(\widetilde{\mathbf{q}}(k), \overline{\mathbf{u}}(k)\big) + \mathbf{A}_k \Delta \mathbf{q}(k) + \mathbf{B}_k \Delta \overline{\mathbf{u}}(k) \qquad (24)$$

where $\overline{u}(k) = [\overline{\delta}_f(k) \, \overline{v}_f(k) \, \overline{\delta}_f(k) \, \overline{v}_r(k)]^T$ represents the input vector. The matrices $\mathbf{A}_k$ and $\mathbf{B}_k$ define vehicle model responses to perturbation. Further details on linear system models can be looked up in a textbook such as:

- Antsaklis, P., Michel, Anthony N. (2007). A Linear Systems Primer.

Equation (24) is in suitable form for Receding Horizon Control (RHC) implementation in a way already performed in the reference:

- Borrelli, F., Bemporad, A., and Morari, M. (2011). Predictive Control for Linear and Hybrid Systems. Cambridge University Press, Cambridge.

A scalar cost function $J^*(k)(\Delta \mathbf{q}(k))$ which includes the state error weight $\mathbf{Q}$ and input cost weight R is given below:

$$J^*(k)\big(\Delta \mathbf{q}(k)\big) = \min_{u(k \to N|k)} \left\{ \sum_{k=0}^{N-1} \Delta \mathbf{q}(k)^T \mathbf{Q} \Delta \mathbf{q}(k) + \Delta \overline{\mathbf{u}}(k)^T \mathbf{R} \Delta \mathbf{q}(k) \right\} \qquad (25)$$

where:

$$\Delta \mathbf{q}(k+1|k) = A_k \Delta \mathbf{q}(k) + B_k \Delta \overline{\mathbf{u}}(k), \quad \Delta \mathbf{q}(k) \in Q, \quad \Delta \overline{\mathbf{u}}(k) \in \mathcal{U}, \quad k = 0, \dots N-1 \qquad (26)$$

The cost matrices can be tuned to achieve adequate system behavior but must maintain positive-semi definiteness to satisfy convergence requirements. The constraint equations are composed of constrains imposed by system dynamics, state constrains $\boldsymbol{Q}$ and input constrains $\mathcal{U}$. When implementing the input constrains matrices, we constrain both absolute input values and rates of change, taking into account the operating point of the system. For absolute input values, this yields a set of inequalities in the form:

$$\mathbf{u}^{MIN} - \overline{\mathbf{u}}(k) \leq \Delta\overline{\mathbf{u}}(k) \leq \mathbf{u}^{MAX} - \overline{\mathbf{u}}(k) \qquad (27)$$

For rates of change, the generalized inequality can be written down as:

$$\mathbf{r}^{MIN}T_s - \Delta\overline{\mathbf{u}}(k+1) \leq \Delta\overline{\mathbf{u}}(k+1) - \Delta\overline{\mathbf{u}}(k) \leq \mathbf{r}^{MAX}T_s - \Delta\overline{\mathbf{u}}(k+1) \qquad (28)$$

where $\Delta\overline{\mathbf{u}}(k+1) = \overline{\mathbf{u}}(k+1) - \overline{\mathbf{u}}(k)$ and $\mathbf{r}$ implies acceleration for velocity inputs and steering velocity for steering inputs.

In vehicle configurations with multiple actuated wheels, special care must be taken to avoid undesired wheel interaction which would lead to some of the wheels blocking or slipping. The longitudinal and

lateral slip components can be derived from the kinematic model set in equation (1) and written as:

$$\boldsymbol{\sigma} = \boldsymbol{H}\boldsymbol{R}(\theta_{AGV})^T\dot{\boldsymbol{q}}_{AGV} - \boldsymbol{v}_{f,r}^{AGV}(\bar{v}_f, \bar{v}_r, \bar{\delta}_f, \bar{\delta}_r) \qquad (29)$$

$\sigma$ is the difference between the rigid-body motion of the vehicle transformed to the individual wheel poses and the actual steering and rolling motion of each wheel, all expressed in the vehicle-local coordinate frame. By substituting equation (1) into equation (29) we obtain a nonlinear equation which can be linearized as:

$$\Delta\boldsymbol{\sigma} = \boldsymbol{\Sigma} \cdot \begin{bmatrix} \Delta\bar{v}_f & \Delta\bar{v}_r & \Delta\bar{\delta}_f & \Delta\bar{\delta}_r \end{bmatrix}^T \qquad (30)$$

We can now add an additional term to the cost function of equation (25) that will penalize inputs which cause wheel slippage, which has the form $\Sigma^T R_\sigma \Sigma$, where $R_\sigma$ becomes a design parameter which can be set to a high value. We focus on penalizing and constraining inputs instead of states, as this has been experimentally found to be computationally more efficient and lead to better controller behavior.

Finally, step 6 computes linearized models for the prediction horizon, cast to quadratic program (QP).

**Step 7** - Equations (25) and (26) define a quadratic optimization problem for which efficient solvers exist, open-source:

- Stellato, B., Banjac, G., Goulart, P., Bemporad, A., and Boyd, S. (2017). OSQP: An operator splitting solver for quadratic programs. ArXiv e-prints.

or proprietary, e.g., the solver signed by embotech AG, 2019.

Vehicle constraints such as steering angle limits, their velocities as well as linear accelerations are taken into account explicitly. The final result of step 7 is to obtain velocity and steering angle setpoint offsets, i.e., $\Delta\bar{v}_f, \Delta\bar{v}_r, \Delta\bar{\delta}_f$ and $\Delta\bar{\delta}_r$ by solving the optimization problem defined by equations (25) and (26).

**Step 8** - The velocity and steering angle setpoint offsets i.e. $\Delta\bar{v}_f, \Delta\bar{v}_r, \Delta\bar{\delta}_f$ and $\Delta\bar{\delta}_r$ from step 7 should be superimposed on the nominal trajectory values $\bar{v}_f, \bar{v}_r, \delta_f$ and $\bar{\delta}_r$, thus driving the tracking errors to zero. The actuators and driving motors execute necessary operations on the AGV under control of the program.

**Step 9** - A new control cycle begins by updating the vehicle state measurements from onboard set of sensors. Before proceeding with control computation, safety sensor inputs are checked, and the velocity profile is re-planned as needed.

By combining the Receding Horizon Control (RHC) methodology with appropriate choices of mathematical model, path pre-processing and linearization methodology, the described method offers the following salient features:

- positioning accuracy satisfying industrial requirements ($\pm 5$ mm, 0.5°), also on curved segments;
- explicit safety guarantees by taking into account vehicle constraints;
- real time execution on platforms with constrained computational capabilities, due to the simplified dynamic model;
- applicability to all industrially relevant vehicle kinematic configurations, including those with multiple actuated wheels; explicitly avoids wheel slippage and ensures that velocity and acceleration constraints are respected;
- on-line path and velocity modifications, e.g., appending segments during motion and reacting to velocity change requests for safety reasons;

- by applying optimization, parameter tuning is simplified, i.e., with a single set of weights **Q** and **R** optimal behavior is achieved over the whole range of operating points; and
- maximum vehicle utilization by minimizing travel times.

The method as described in steps 1-9 is more than aggregation of methods/features, i.e., known approaches for partial problems in the field. This is especially true for the approaches disclosed in steps 4 and 5 in non-trivial combination with other steps.

## Industrial Applicability

Industrial applicability of the above method, which belongs to the technical field of controlling position or course in two dimensions along the already precomputed path involving the speed control of the vehicle - is obvious. Furthermore, it is known in the art that the AGVs are not being used to their full potential. Namely, maximum vehicle velocities on curved segments are often artificially reduced to maintain the required accuracy. The present invention, i.e., the proposed method, unlocks the velocity potentials of the AGVs by the novel approach which is disclosed in steps 1-9 of the present invention.

## Claims

1. A control method for automated guided vehicles, AGV, where said AGV is equipped with:

    - one or more computer-controlled actuators and optionally brakes, allowing the control of a steering and a speed of the said AGV over the parametrically set path curve $C(u)$ within the given environment;
    - set of sensors, adapted to interact with the said environment, the set of sensors being adapted to generate signals from which the AGV position is calculable within the said environment;
    and a processing unit which is adapted to execute said control method, to the AGV's actuators and optionally brakes and receive the signals generated by the AGV sensors; where initially: vehicle parameters, list of path's segments and constrains, and vehicle state is loaded into the processing unit as well as the program modules for the execution of the said method; wherein said method consists of the following steps:

    i) performing adaptive sampling of the path given as a parametric curve $C(u)$ to identify the critical velocity profile points represented as the ordered sequence $U$ keeping satisfied the following criterion $\mathcal{L}(C_k) \simeq 1$, where $\mathcal{L}(C_k)$ is:

    $$\mathcal{L}(C_k) = \frac{s(u_k, u_{k+1})}{\|C(u_{k+1}) - C(u_k)\|}$$

    and $s(u_k, u_{k+1})$ is defined as the curve length from C(a) to c(b), as follows:

    $$s(a, b) = \int_a^b \|\dot{C}(u)\| \, du$$

    ii) computing the velocity limits $L$ at critical velocity profile points determined in step i) taking into account the AGV acceleration and velocity limits imposed by the vehicle actuators, segment-specific velocity limits due to the traffic rules, safety input activation received from AGV sensors and limits imposed by the steering velocity limits, and finishes the said step with ordered sequence $U$ and corresponding velocity limits L that define specific wheel traction velocities;

    iii) planning optimal traction velocity and steering profiles for the wheels taking into account maximum accelerations of the said wheels, where the said step ends with nominal traction velocity and steering setpoints for each wheel;

    **characterized by** that the method further comprises:

    iv) adapting the sample time $T_s$ and prediction horizon lengths $N$ in the model predictive control preloaded to the processing unit as the program module, to the current AGV's velocity to maintain high accuracy at low speeds by increasing the sample time and prediction horizon at lower speed, in order to insure lateral error elimination;

v) projecting the current vehicle pose onto its closest point along the path segments given as a parametric curve, and then samples discrete path poses for the entire prediction horizon, assuming nominal velocities and steering angles, to obtain reference coordinate frames and linearization points for the next step;

vi) computing linearized models for the prediction horizon, casts the optimal control problem to a quadratic program, QP;

vii) solving QP from step vi) to obtain velocity and steering angle setpoint offsets $\Delta\bar{v}_f$, $\Delta\bar{v}r$, $\Delta\bar{\delta}_f$ and $\Delta\bar{\delta}_r$;

viii) velocity and steering angle setpoint offsets $\Delta\bar{v}_f$, $\Delta\bar{v}_r$, $\Delta\bar{\delta}_f$ and $\Delta\bar{\delta}_r$ are superimposed on the nominal trajectory values defined as $\bar{v}_f$, $\bar{v}_r$, $\bar{\delta}_f$ and $\bar{\delta}_r$, thus driving the tracking errors to zero and the actuators execute necessary operations on the AGV under control; and

ix) a new control cycle is started by updating the vehicle state measurements from AGV sensors; and

    A. if the path is not appended by a new path's segment, the safety sensor inputs are checked and if remain unchanged program control is directed to step iv) - otherwise, if the safety sensor inputs are changed the program control is directed to step ii); or

    B. if the path is appended by a new path's segment, the method is directed to step i).

2. A control method for automated guided vehicles according to claim 1, wherein adaptive sampling in step i) is performed by using Bezier curves.

3. A control method for automated guided vehicles according to any of preceding claims, wherein in step iii) a first-order lag of wheel velocity responses and a first or second order lag of wheel steering responses are taken into account which is relevant for ensuring good tracking, as well as the external velocity limit control; the resulting trajectory for each respective wheel minimizes the total travel time by adjusting the actuator traction velocities in continuous manner while achieving the imposed vehicle velocity limits per path segments.

4. A control method for automated guided vehicles according to any of preceding claims, wherein the method is adapted to be carried out when the vehicle configuration is with multiple actuator wheels.

5. An automated guided vehicle comprising means for carrying out the method of claims 1-4.

**Patentansprüche**

1. Steuerungsverfahren für automatisierte geführte Fahrzeuge, AGV, wobei das AGV ausgestattet ist mit:

- einem oder mehreren computergesteuerten Betätigungsvorrichtungen und optional Bremsen, welche die Steuerung einer Lenkung und einer Geschwindigkeit des AGV über die parametrisch gesetzte Pfadkurve C(u) innerhalb der gegebenen Umgebung ermöglichen;

- einer Reihe von Sensoren, die angepasst sind, um mit der Umgebung zu interagieren, wobei die Reihe von Sensoren angepasst sind, um Signale zu erzeugen, aus denen sich die AGV-Position innerhalb der Umgebung berechnen lässt;

und einer Verarbeitungseinheit, die angepasst ist, um das Steuerverfahren auszuführen, die Betätigungsvorrichtungen und optional Bremsen des AGV zu steuern und die von den AGV-Sensoren erzeugten Signale zu empfangen; wobei zunächst: Fahrzeugparameter, eine Liste von Pfadsegmenten und -beschränkungen und Fahrzeugzustand in die Verarbeitungseinheit geladen werden, sowie die Programmmodule zur Ausführung des Verfahrens; wobei das Verfahren aus den folgenden Schritten besteht:

i) Durchführen einer adaptiven Abtastung des als parametrische Kurve **C**(u) gegebenen Pfads, um die kritischen Schnelligkeitsprofilpunkte, die als geordnete Sequenz $U$ dargestellt sind, zu identifizieren, die das folgende Kriterium $\mathcal{L}(\boldsymbol{C_k}) \simeq 1$, erfüllt halten, wobei $\mathcal{L}(\boldsymbol{C_k})$ ist:

$$\mathcal{L}(\boldsymbol{C_k}) = \frac{s(u_k, u_{k+1})}{\|\boldsymbol{C}(u_{k+1}) - \boldsymbol{C}(u_k)\|}$$

und $s(u_k, u_{k+1})$ als die Kurvenlänge von C(a) nach C(b) wie folgt definiert ist:

$$s(a,b) = \int_a^b \left\| \dot{\boldsymbol{C}}(u) \right\| du$$

ii) Berechnen der Schnelligkeitsgrenzen **L** an in Schritt i) bestimmten kritischen Schnelligkeitsprofilpunkten unter Berücksichtigung der von den Betätigungsvorrichtungen des Fahrzeugs auferlegten Beschleunigungs- und Geschwindigkeitsgrenzen des AGV, der segmentspezifischen Schnelligkeitsgrenzen aufgrund der Verkehrsregeln, der von den AGV-Sensoren empfangenen Sicherheitseingabeaktivierung und der durch die Lenkschnelligkeitsgrenzen auferlegten Grenzen, und Beenden des Schritts mit der geordneten Sequenz U und entsprechenden Schnelligkeitsgrenzen L, die spezielle Radtraktionsschnelligkeiten definieren;

iii) Planen optimaler Traktionsschnelligkeits- und Lenkprofile für die Räder unter Berücksichtigung maximaler Beschleunigungen der Räder, wobei der Schritt mit nominalen Traktionsschnelligkeits- und Lenksollwerten für jedes Rad endet;

**dadurch gekennzeichnet, dass** das Verfahren weiter umfasst:

iv) Anpassen der Abtastzeit $T_s$ und Prädiktionshorizontlängen $N$ in der modellprädiktiven Steuerung, die als das Programmmodul in die Verarbeitungseinheit vorgeladen ist, an die aktuelle Schnelligkeit des AGV, um eine hohe Genauigkeit bei niedrigen Geschwindigkeiten durch Erhöhen von Abtastzeit und Prädiktionshorizont bei niedrigerer Geschwindigkeit aufrechtzuerhalten, um eine Beseitigung lateraler Fehler sicherzustellen;

v) Projizieren der aktuellen Fahrzeuglage auf seinen nächstgelegenen Punkt entlang der als parametrische Kurve gegebenen Pfadsegmente und danach Abtasten diskreter Pfadlagen für den gesamten Prädiktionshorizont unter Annahme nominaler Schnelligkeiten und Lenkwinkel, um Referenzkoordinatensysteme und Linearisierungspunkte für den nächsten Schritt zu erhalten;

vi) Berechnen linearisierter Modelle für den Prädiktionshorizont, wodurch das Problem der optimalen Steuerung in ein quadratisches Programm, QP, umgewandelt wird;

vii) Lösen von QP aus Schritt vi), um Sollwert-Offsets $\Delta\tilde{v}_f$, $\Delta\tilde{v}_r$, $\Delta\overline{\delta}_f$ für Schnelligkeit und Lenkwinkel und $\Delta\overline{\delta}_r$; zu erhalten

viii) Schnelligkeits- und Lenkwinkelsollwert-Offsets $\Delta\tilde{v}_f$, $\Delta\tilde{v}_r$, $\Delta\overline{\delta}_f$ und $\Delta\overline{\delta}_r$ den als $\tilde{v}_f$, $\tilde{v}_r$, $\overline{\delta}_f$ und $\overline{\delta}_r$ definierten nominalen Trajektorienwerten überlagert werden, wodurch die Fehler bei der Verfolgung auf Null reduziert werden und die Betätigungsvorrichtungen erforderliche Operationen am AGV unter Kontrolle ausführen; und

ix) ein neuer Steuerzyklus durch Aktualisieren der Fahrzeugzustandsmessungen von AGV-Sensoren gestartet wird; und

a) wenn dem Pfad kein neues Pfadsegment angehängt wird, die Sicherheitssensoreingänge überprüft werden und, wenn sie unverändert bleiben, die Programmsteuerung zu Schritt iv) weitergeleitet wird - ansonsten, wenn die Sicherheitssensoreingänge geändert werden, die Programmsteuerung zu Schritt ii) weitergeleitet wird; oder

b) wenn dem Pfad ein neues Pfadsegment angehängt wird, das Verfahren zu Schritt i) weitergeleitet wird.

2. Steuerungsverfahren für automatisierte geführte Fahrzeuge nach Anspruch 1, wobei adaptives Abtasten in Schritt i) unter Verwendung von Bézier-Kurven durchgeführt wird.

3. Steuerungsverfahren für automatisierte geführte Fahrzeuge nach einem der vorstehenden Ansprüche, wobei in Schritt iii) eine Verzögerung erster Ordnung von Radschnelligkeitsreaktionen und eine Verzögerung erster oder zweiter Ordnung von Radlenkungsreaktionen, die für die Sicherstellung einer guten Verfolgung ebenso relevant sind, wie die externe Schnelligkeitsbegrenzungssteuerung, berücksichtigt werden; die resultierende Trajektorie für jedes jeweilige Rad die Gesamtfahrzeit durch kontinuierliches Anpassen der Traktionsschnelligkeit der Betätigungsvorrichtung minimiert, während die auferlegten Fahrzeugschnelligkeitsgrenzen pro Pfadsegment erreicht werden.

4. Steuerungsverfahren für automatisierte geführte Fahrzeuge nach einem der vorstehenden Ansprüche, wobei das Verfahren angepasst ist, um ausgeführt zu werden, wenn die Fahrzeugkonfiguration mit mehreren Betätigungsvorrichtungsrädern ist.

**5.** Automatisiertes geführtes Fahrzeug, das Mittel zum Ausführen des Verfahrens nach Ansprüchen 1-4 umfasst.

**Revendications**

**1.** Procédé de commande pour des véhicules guidés automatisés, AGV, dans lequel ledit AGV est équipé :

- d'un ou de plusieurs actionneurs commandés par ordinateur et, facultativement, de freins, permettant la commande d'une direction et d'une vitesse dudit AGV sur la courbe de trajet définie paramétriquement **C**($u$) dans l'environnement donné ;
- d'un ensemble de capteurs, adaptés pour interagir avec ledit environnement, l'ensemble de capteurs étant adapté pour générer des signaux à partir desquels la position d'AGV peut être calculée dans ledit environnement ;

et d'une unité de traitement qui est adaptée pour exécuter ledit procédé de commande, pour commander les actionneurs de l'AGV et, facultativement, les freins et recevoir les signaux générés par les capteurs d'AGV ; dans lequel initialement : des paramètres de véhicule, une liste de segments et de contraintes du trajet et l'état du véhicule sont chargés dans l'unité de traitement ainsi que les modules de programme pour l'exécution dudit procédé ; dans lequel ledit procédé se compose des étapes suivantes :

i) la réalisation d'un échantillonnage adaptatif du trajet donné sous la forme d'une courbe paramétrique **C**($u$) pour identifier les points de profil de vitesse critiques représentés par la séquence ordonnée $U$ en continuant de satisfaire le critère $\mathcal{L}(\boldsymbol{C_k}) \simeq 1$, suivant dans lequel $\mathcal{L}(\boldsymbol{C_k})$ est :

$$\mathcal{L}(\boldsymbol{C_k}) = \frac{s(u_k, u_{k+1})}{\|\boldsymbol{C}(u_{k+1}) - \boldsymbol{C}(u_k)\|}$$

et $s(u_k, u_{k+1})$ est défini comme étant la longueur de la courbe de C(a) à C(b), comme suit :

$$s(a, b) = \int_a^b \|\dot{\boldsymbol{C}}(u)\| \, du$$

ii) le calcul des limites de vitesse **L** aux points de profil de vitesse critiques déterminés à l'étape i) en tenant compte des limites d'accélération et de vitesse d'AGV imposées par les actionneurs de véhicule, des limites de vitesse spécifiques à un segment dues aux règles de circulation, d'une activation d'entrée de sécurité reçue de capteurs d'AGV et de limites imposées par les limites de vitesse de braquage, et la fin de ladite étape avec une séquence ordonnée $U$ et des limites de vitesse correspondantes L qui définissent des vitesses de traction de roue spécifiques ;
iii) la planification de profils de vitesse de traction et de braquage optimaux pour les roues en tenant compte d'accélérations maximales desdites roues, dans lequel ladite étape se termine avec des points de consigne de vitesse de traction et de braquage nominaux pour chaque roue ;

**caractérisé en ce que** le procédé comprend en outre :

iv) l'adaptation du temps d'échantillonnage $T_s$ et les longueurs d'horizon de prédiction $N$ dans la commande prédictive de modèle, préchargé dans l'unité de traitement en tant que module de programme, à la vitesse actuelle de l'AGV pour maintenir une précision élevée à basse vitesse en augmentant le temps d'échantillonnage et l'horizon de prédiction à basse vitesse, afin d'assurer une élimination d'erreur latérale ;
v) la projection de la pose de véhicule actuelle sur son point le plus proche le long des segments de trajet donnés sous la forme d'une courbe paramétrique et, ensuite, l'échantillonnage de poses de trajet discrètes pour tout l'horizon de prédiction, en supposant des vitesses et des angles de braquage nominaux, pour obtenir des cadres de coordonnées de référence et des points de linéarisation pour l'étape suivante ;
vi) le calcul de modèles linéarisés pour l'horizon de prédiction, avec transformation du problème de commande optimale en un programme quadratique, QP ;

vii) la résolution du QP de l'étape vi) pour obtenir les décalages de consigne de vitesse et d'angle de braquage $\Delta \tilde{v}_f$, $\Delta \tilde{v}_r$, $\Delta \overline{\delta}_f$, et $\Delta \overline{\delta}_r$ ;

viii) des décalages de point de consigne de vitesse et d'angle de braquage $\Delta \tilde{v}_f$, $\Delta \tilde{v}_r$, $\Delta \overline{\delta}_f$ et $\Delta \overline{\delta}_r$ sont superposés aux valeurs de trajet nominales définies comme $\tilde{v}_f$, $\tilde{v}_r$, $\overline{\delta}_f$ et $\overline{\delta}_r$, entraînant ainsi les erreurs de suivi à zéro et les actionneurs exécutent des opérations nécessaires sur l'AGV sous commande ; et

ix) un nouveau cycle de commande est commencé en mettant à jour les mesures d'état de véhicule provenant des capteurs d'AGV ; et

a) si le trajet n'est pas complété par un nouveau segment de trajet, les entrées du capteur de sécurité sont vérifiées et, si elles restent inchangées, la commande de programme est dirigée vers l'étape iv) - sinon, si les entrées de capteur de sécurité sont modifiées, la commande de programme est dirigée vers l'étape ii) ; <u>ou</u>

b) si le trajet est complété par un nouveau segment de trajet, le procédé st dirigé vers l'étape i).

2. Procédé de commande pour des véhicules guidés automatisés selon la revendication 1, dans lequel l'échantillonnage adaptatif à l'étape i) est effectué en utilisant des courbes de Bézier.

3. Procédé de commande pour des véhicules guidés automatisés selon l'une quelconque des revendications précédentes, dans lequel, à l'étape iii), un retard de premier ordre de réponses de vitesse de roue et un retard de premier ou de second ordre de réponses de braquage de roue sont pris en compte, ce qui est pertinent pour assurer un bon suivi, ainsi que la commande de limite de vitesse externe ; la trajectoire résultante pour chaque roue respective minimise le temps de déplacement total en ajustant les vitesses de traction d'actionneur de manière continue tout en atteignant les limites de vitesse de véhicule imposées par segments de trajet.

4. Procédé de commande pour des véhicules guidés automatisés selon l'une quelconque des revendications précédentes, dans lequel le procédé est adapté pour être mis en oeuvre lorsque la configuration de véhicule est avec de multiples roues d'actionneur.

5. Véhicule guidé automatisé comprenant des moyens pour mettre en oeuvre le procédé selon les revendications 1-4.

Figure 1A

A
B

**Step 5** – Project vehicle pose onto
path, predict poses for prediction
horizon

**Step 6** – Compute linearized models for
prediction horizon, cast to quadratic
program (QP)

**Step 7** – Solve quadratic program (QP)
to obtain setpoint offsets: $\Delta \bar{v}_f$, $\Delta \bar{v}_r$,
$\Delta \bar{\delta}_f$ and $\Delta \bar{\delta}_r$

**Step 8** – Superimpose first result onto
profile setpoints

**Step 9** – Update vehicle
state measurements

Actuator
setpoints

Figure 1B

Figure 2

$C_f(u)$

$C_r(u)$

$C(u)$

$\tilde{\theta}_{AGV}(u) = const.$

Driving direction

**Figure 3A**

$C(u)$

$C_r(u)$

$C_f(u)$

Driving direction

**Figure 3B**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2019086930 A1

- CN 109375632 A

**Non-patent literature cited in the description**

- **PADEN, B.** ; **CÁP, M.** ; **YONG, S. Z.** ; **YERSHOV, D.** ; **FRAZZOLI, E.** A survey of motion planning and control techniques for self-driving urban vehicles.. *IEEE Transactions on intelligent vehicles*, 2016, vol. 1 (1), 33-55
- Path tracking for automated driving: A tutorial on control system formulations and ongoing research.. **SORNIOTTI, A.** ; **BARBER, P.** ; **DE PINTO, S**. In Automated Driving. Springer, 2017, 71-140
- **ANDREASSON, H.** ; **BOUGUERRA, A.** ; **CIRILLO, M.** ; **DIMITROV, D. N.** ; **DRIANKOV, D.** ; **KARLSSON, L.** ; **LILIENTHAL, A. J.** ; **PECORA, F.** ; **SAARINEN, J. P.** ; **SHERIKOV, A.** Autonomous transport vehicles: Where we are and what is missing.. *IEEE Robotics & Automation Magazine*, 2015, vol. 22 (1), 64-75
- **CAMPBELL, S. F.** Steering control of an autonomous ground vehicle with application to the DARPA urban challenge. *Master's thesis, Massachusetts Institute of Technology*, 2007, https://dspace.mit.edu/handle/1721.1/42301
- **KELLY, A.** Mobile Robotics: Mathematics, Models, and Methods.. Cambridge University Press, 2013

- **KIM, E.** ; **KIM, J.** ; **SUNWOO, M.** Model predictive control strategy for smooth path tracking of autonomous vehicles with steering actuator dynamics.. *International Journal of Automotive Technology*, 2014, vol. 15 (7), 1155-1164
- **DE FIGUEIREDO L. H.** Adaptive Sampling of Parametric Curve. IMPA. Institute de Matematica Pura e Aplicada, 1993
- **RAINERI, M.** ; **PERRI, S.** ; **BIANCO, C. G. L.** Online velocity planner for laser guided vehicles subject to safety constraints.. *2017 IEEE/RSJ International Conference on Intelligent Robots and Systems (IROS)*, 2017, 6178-6184
- **RAKOVIC, S.V.** ; **LEVINE W. S.** *Handbook of Model Predictive Control*, 2018
- **SONTAG, E. D.** Mathematical Control Theory: Deterministic Finite Dimensional Systems (Texts in Applied Mathematics) (v. 6).. Springer, 1998
- **ANTSAKLIS, P.** ; **MICHEL, ANTHONY N.** *A Linear Systems Primer*, 2007
- **BORRELLI, F.** ; **BEMPORAD, A.** ; **MORARI, M.** Predictive Control for Linear and Hybrid Systems.. *Cambridge University Press*, 2011
- **STELLATO, B.** ; **BANJAC, G.** ; **GOULART, P.** ; **BEMPORAD, A.** ; **BOYD, S.** *OSQP: An operator splitting solver for quadratic programs*, 2017